# EUROPEAN PATENT APPLICATION

(11) **EP 3 089 507 A1**
(43) Date of publication of application: **02.11.2016**
(21) Application number: 14874718.1
(22) Date of filing: 10.12.2014
(51) Int. Cl.: H04W 24/10, H04J 11/00, H04J 99/00, H04W 16/32, H04W 28/16, H04W 72/04

(54) **USER TERMINAL, WIRELESS BASE STATION, AND WIRELESS COMMUNICATION METHOD**

(30) Priority: 26.12.2013 JP 2013270120
(71) Applicant: NTT DOCOMO, INC., Chiyoda-ku Tokyo 100-6150 (JP)
(72) Inventor: TAKEDA, Kazuaki, Tokyo 100-6150 (JP); NAGATA, Satoshi, Tokyo 100-6150 (JP)
(74) Representative: Hoffmann Eitle
(86) International application number: PCT/JP2014/082720
(87) International publication number: WO 2015/098529

(57) **Abstract**

The present invention is designed to allow adequate execution of CoMP even in a structure in which a plurality of cells are placed in a high density. A user terminal executes coordinated transmission with a plurality of cells, and has an estimation section that performs channel estimation by using a plurality of desired signal power measurement resources and interference signal power measurement resources, and a control section that controls feedback of CSI processes by using a table, in which at least information about the CSI processes is defined, the CSI processes being combinations of estimation results of predetermined desired signal power measurement resources and estimation results of interference signal power measurement resources, and the control section switches between and uses a plurality of tables, in each of which information about different CSI processes is defined.

## Description

### Technical Field

The present invention relates to a user terminal, a radio base station and a radio communication method in a next-generation mobile communication system.

### Background Art

In LTE (Long Term Evolution) and successor systems of LTE (referred to as, for example, "LTE-advanced," "FRA (Future Radio Access)," "4G," etc.), a radio communication system (referred to as, for example, "HetNet" (Heterogeneous Network)) to place small cells (including pico cells, femto cells and so on) having relatively small coverage of a radius of approximately several meters to several tens of meters, within a macro cell having relatively large coverage of a radius of approximately several hundred meters to several kilometers, is under study (see, for example, non-patent literature 1).

Regarding this radio communication system, a scenario to use the same frequency band in both the macro cell and the small cells (also referred to as, for example, "co-channel") and a scenario to use different frequency bands between the macro cell and the small cells (also referred to as, for example, "separate frequencies") are under study. The latter scenario is also under study to use a relatively low frequency band (for example, the 2 GHz band) in the macro cell and use a relatively high frequency band (for example, the 3.5 GHz band, 5 GHz band and so on) in the small cells.

Furthermore, in LTE-A, coordinated multi-point (CoMP) transmission/reception techniques are under study as techniques to realize inter-cell orthogonalization. In CoMP transmission/reception, a plurality of cells coordinate and perform signal processing for transmission and reception for one user terminal UE or for a plurality of user terminals UE. For example, in the downlink, simultaneous transmission by multiple cells employing precoding, coordinated scheduling/beamforming and so on are under study. By employing these CoMP transmission/reception techniques, improvement of throughput performance is expected, especially with respect to user terminals UE located on cell edges.

In order to employ CoMP transmission/reception techniques, it is necessary to feed back channel state information (CSI) for a plurality of cells from a user terminal to radio base stations. Channel state information (hereinafter referred to as "CSI") is information that is based on dynamic downlink channel states, and includes, for example, channel quality indicators (CQIs), precoding matrix indicators (PMIs), rank indicator (RIs) and so on. This CSI is reported from user terminals to radio base stations periodically or aperiodically.

### Citation List

### Non-Patent Literature

Non-Patent Literature 1: 3GPP TR 36.814 "E-UTRA Further Advancements for E-UTRA Physical Layer Aspects"

### Summary of Invention

### Technical Problem

The above-described HetNet can increase its capacity by placing many mall cells within a macro cell in a high density. For example, in a HetNet architecture for Rel. 12 and later versions, it may be possible to place small cells, in a localized manner, in places where the traffic is heavy, in order to provide an off-loading effect between cells.

On the other hand, in areas where small cells are placed in a high density, it may be also possible to execute coordinated multi-point transmission/reception (CoMP) between a user terminal and a plurality of small cells. In this case, it becomes possible to configure a plurality of types of CSI -RSs (Channel State Information-Reference Signals) for one user terminal, so that the volume of CSI which the user terminal feeds back may also increase. In particular, when the CSI-RS for desired signal measurement and the zero-power CSI-RS for interference measurement are configured as CSI-RSs, the types of CSI to feed back might increase. In this case, how the user terminal should feed back CSI is the problem.

For example, if the user terminal feeds back all the CSI, the overhead of CSI feedback increases. Meanwhile, if the overhead of CSI feedback is simply made small, there is a threat that desired CSI cannot be fed back from the user terminal and CoMP cannot be employed in an effective manner.

The present invention has been made in view of the above, and it is therefore an object of the present invention to provide a user terminal, a radio base station and a radio communication method that allow adequate execution of CoMP in a structure in which a plurality of cells are placed in a high density.

### Solution to Problem

The user terminal of the present invention executes coordinated transmission with a plurality of cells, and has an estimation section that performs channel estimation by using a plurality of desired signal power measurement resources and interference signal power measurement resources, and a control section that controls feedback of CSI processes by using a table, in which at least information about the CSI processes is defined, the CSI processes being combinations of estimation results of predetermined desired signal power measurement resources and estimation results of interference signal power measurement resources, and, in this user terminal, the control section switches between and uses a plurality of tables, in each of which information about different CSI processes is defined.

### Advantageous Effects of Invention

According to the present invention, it is possible to execute CoMP adequately even in a structure in which a plurality of cells are placed in a high density.

### Brief Description of Drawings

FIG. 1 is a conceptual diagram of a HetNet;
FIG. 2 is a diagram to explain a high-density small cell environment;
FIG. 3 is a diagram to explain CoMP in a high-density small cell environment;
FIGs. 4 provide diagrams to explain CSI-RS resources and CSI-IM resources;
FIGs. 5 are diagrams to explain CSI processes;
FIGs. 6 provide diagrams to show examples of tables for use in aperiodic CSI feedback;
FIGs. 7 provide diagrams to show examples of tables for use in periodic CSI feedback;
FIG. 8 is a schematic diagram to show an example of a radio communication system according to the present embodiment;
FIG. 9 is a diagram to explain an overall structure of a radio base station according to the present embodiment;
FIG. 10 is a diagram to explain a functional structure of a radio base station according to the present embodiment;
FIG. 11 is a diagram to explain an overall structure of a user terminal according to the present embodiment; and
FIG. 12 is a diagram to explain a functional structure of a user terminal according to the present embodiment.

### Description of Embodiments

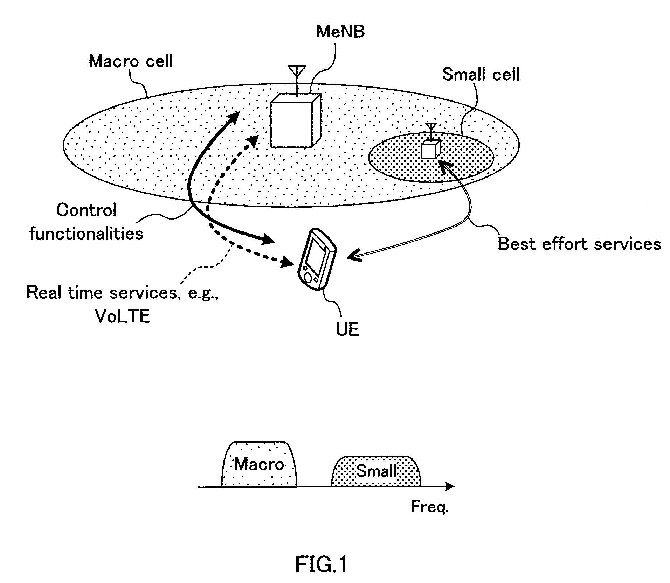

FIG. 1 is a conceptual diagram of a HetNet. As shown in FIG. 1, a HetNet refers to a radio communication system in which macro cells and small cells are arranged to geographically overlap each other at least in part. A HetNet is comprised of a radio base station that forms a macro cell (hereinafter referred to as a "macro base station"),a radio base station that forms a small cell (hereinafter referred to as a "small base station"), and a user terminal that communicates with the macro base station and the small base station.

In a macro cell M, for example, a carrier F1 of a relatively low frequency band (hereinafter referred to as the "low frequency band carrier") such as the 800 MHz or 2 GHz band is used. On the other hand, in a plurality of small cells S, a carrier F2 of a relatively high frequency band(hereinafter referred to as the "high frequency band carrier") such as the 3.5 GHz and 5 GHz bands is used. Note that the 800 MHz, 2 GHz, 3.5 GHz and 5 GHz bands are only examples. The 3.5 GHz or the 5 GHz band may be used for the carrier for the macro cell M, and the 800 MHz and 2 GHz bands may be used for the carrier for the small cells S.

A HetNet is also under study to secure e coverage and provide mobility support in the macro cell that uses the low frequency band carrier F1, and increase its capacity and carry out off-loading in the small cells that use the high frequency band carrier F2 (also referred to as "macro-assisted," "C/U-plane split," etc.). For example, when a user terminal is capable of connecting with both a macro base station and a small base station, separate control may be executed so that the control plane (C (Control)-plane) to handle control messages is supported by the macro cell, and the user plane (U (User)-plane) to handle user data is supported by the small cell.

That is, it is possible to achieve increased UE throughput by allowing the macro cell to establish control-plane connections and secure coverage, mobility and so on, and allowing the small cell to establish user-plane connections, which are specifically for data, and increase capacity.

Furthermore, generally speaking, the distribution of users and traffic are not fixed, but change over time or between locations. Consequently, when many small cells are placed within a macro cell, the small cells may be placed in such a manner that their density and environments vary (sparse and dense) between locations, as shown in above FIG. 1.

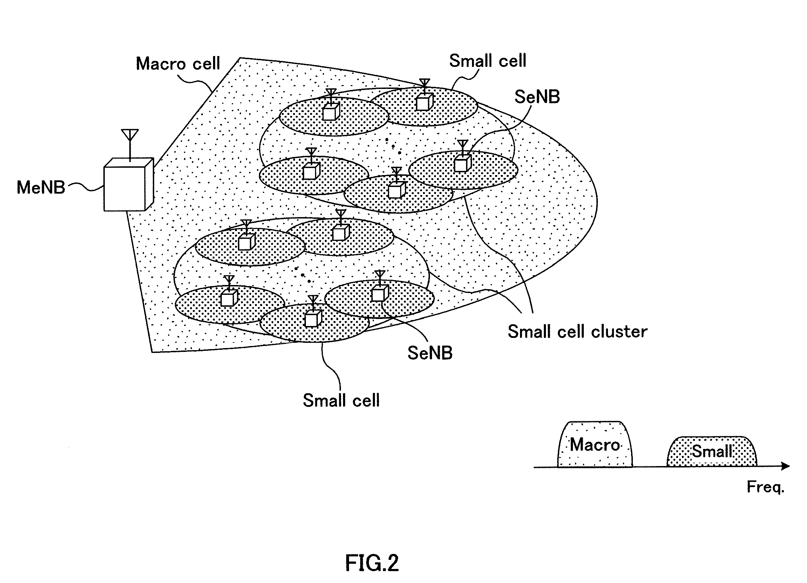

For example, it may be possible to raise the density to place small cells (dense small cells) in train stations, shopping malls and so on where many user terminals gather, and lower the density to place small cells (sparse small cells) in places where user terminals do not gather. In this way, in Rel. 12 and later versions, small cells may be placed in a high density in clusters in a specific range (cluster deployment) (see FIG. 2). Also, as for the method of connecting between small cell clusters and the macro cell and/or between small cells in the clusters, the use of an ideal backhaul link or a non-ideal backhaul link is under study.

On the other hand, when the density of small cells is simply increased, the received SINR (Signal to Interference plus Noise Ratio) deteriorates due to increased interference from nearby small cells. As a result of this, the effect of improving throughput by way of increasing the number of small cells saturates. Also, unlike conventional macro cells, small cells are not arranged according to plan, but are assumed to be arranged without cell planning. Furthermore, from the perspective of making small cell planning easy, there is a demand to allow interference between small cells and remove interference signals by means of inter-small-cell interference coordination.

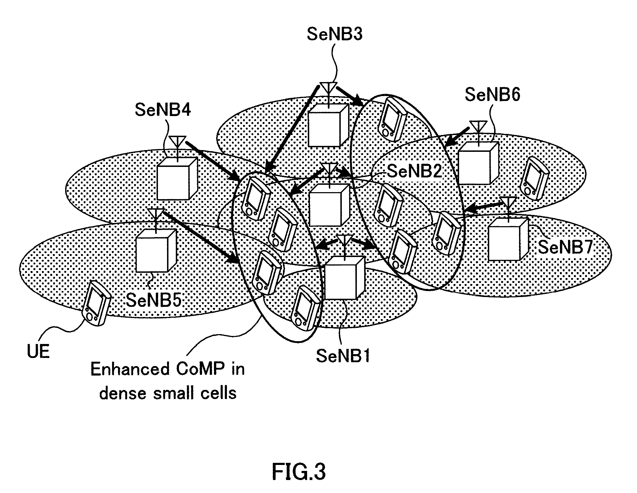

Given that a number of areas where different cells overlap each other are created in an environment in which small cells such as those described above are placed in a high density (high-density small cell environment), the present inventors have focused on the fact that the range where CoMP is applicable widens compared to conventional macro cell environment (see FIG. 3). For example, a case may be possible where, as shown in FIG. 3, a user terminal receives signals from small cells of four or more cells depending on the arrangement of small cells. In such cases, applying CoMP may be very effective for interference coordination between the small cells.

Meanwhile, in a high-density small cell environment, a user terminal may receive channel state information measurement reference signals (CSI-RSs) separately transmitted from a plurality of cells. Now, the CSI-RS defined in LTE-A will be described below.

CSI-RSs are reference signals that are used to measure channel quality information (CSI: Channel State Information) such as CQIs (Channel Quality Indicators), PMIs (Precoding Matrix Indicators), RIs (Rank Indicators) and so on as channel states. Unlike CRSs (Cell-specific Reference Signals) that are allocated to all subframes, CSI-RSs are allocated in a predetermined cycle (for example, in a 10-subframe cycle). Also, CSI-RSs are specified by parameters such as position, sequence and transmission power. The position of a CSI-RS includes subframe offset, cycle, and subcarrier-symbol offset (index).

Note that, non-zero-power CSI-RSs and zero-power CSI-RSs are defined as CSI-RSs. With non-zero-power CSI-RSs, transmission power is distributed over the resources where the CSI-RSs are allocated, while, with zero-power CSI-RSs, transmission power is not distributed over the resources where they are allocated (that is, the CSI-RSs are muted).

In one subframe defined in LTE, CSI-RSs are allocated not to overlap with control signals allocated to a downlink control channel (PDCCH (Physical Downlink Control Channel)), user data allocated to the PDSCH (Physical Downlink Shared Channel), and other reference signals such as CRSs (Cell-specific Reference Signals) and DM-RSs (Demodulation-Reference Signals). Also, from the perspective of suppressing the PAPR (Peak to Average Power Ratio), resources where CSI-RSs can be allocated are allocated in sets of two resource elements (REs) that neighbor each other in the time axis direction.

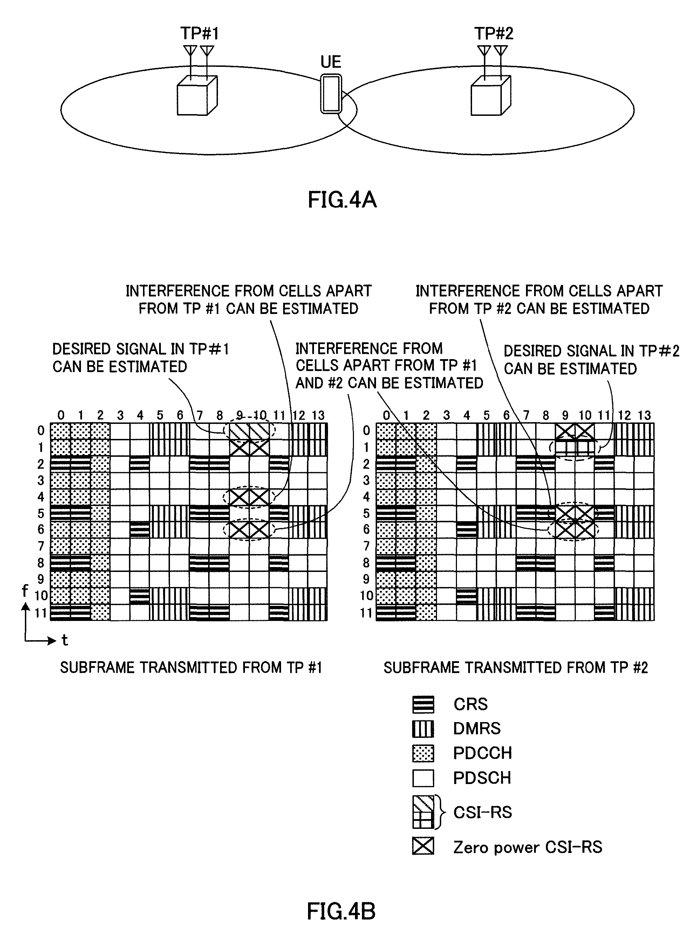

When channel states are calculated using CSI-RSs, it is important to take into account the impact of interference from other transmission points (other cells). Consequently, it is possible to measure interference from other transmission points by using CSI-RS resources for desired signal power measurement and CSI-IM (Channel State Information-Interference Measurement) resources for interference signal power measurement (see FIGs. 4).

In this way, in Rel. 11 and later CoMP, calculation of interference components from other cells by using CSI-RS resources and CSI-IM resources in combination has been introduced. Information about CSI combining CSI-RS resources and CSI-IM resources will be referred to as CSI processes. Now, CSI processes according to the present embodiment will be described below.

FIG. 4A shows a schematic diagram in which transmission points TP #1 and TP #2 employing CoMP carry out downlink transmission to user terminal. FIG. 4B shows example arrangement patterns of CSI-RS resources for desired signal power measurement and CSI-IM resources for interference signal power measurement. Note that each transmission point can allocate to non-zero power CSI-RS to CSI-RS resources, and allocate zero-power CSI-RSs to CSI-IM resources.

A user terminal performs channel estimation based on CSI-RS resources for desired signal power measurement and CSI-IM resources for interference signal power measurement, and generates CSI (for example, CQI). For example, the user terminal measures the signal power (RSRP: Reference Signal Received Power) in CSI-RS resources for desired signal power measurement and the signal power in CSI-IM resources for interference signal power measurement. Furthermore, the user terminal can also measure the RSRQ (Reference Signal Received Quality), the SINR and so on based on the measured signal powers.

In this way, the user terminal generates and feeds back a plurality of types of CSI based on the arrangement pattern of CSI-RS resources for desired signal power measurement and CSI-IM resources for interference signal power measurement configured in each transmission point.

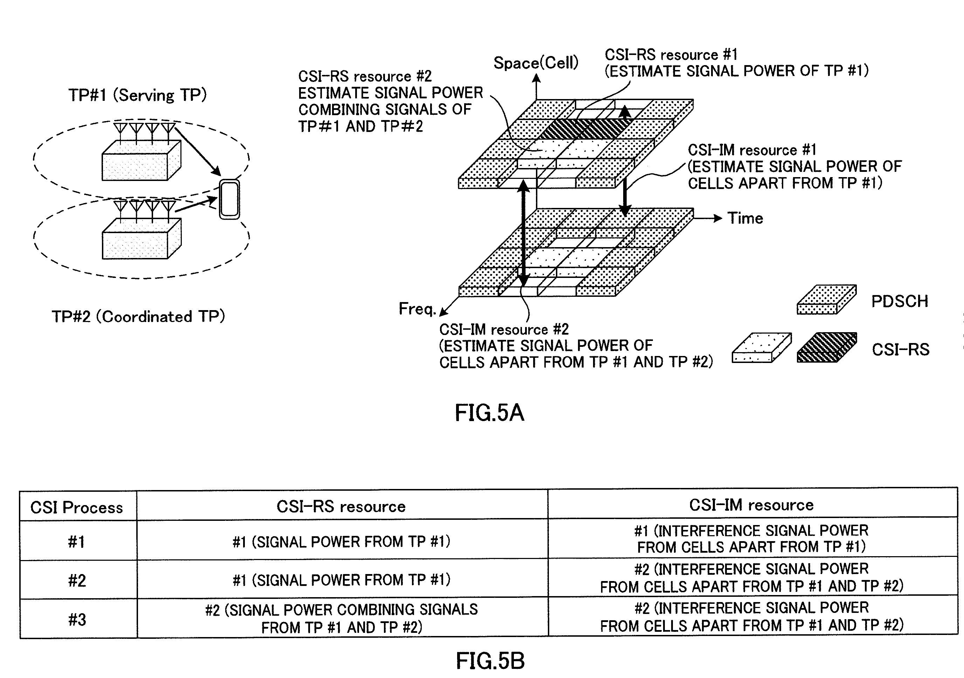

For example, assume a case where, as shown in FIG. 5A, CSI-IM resources #1 and #2 and CSI-RS resources #1 and #2 are configured in a user terminal when CoMP is employed between transmission points TP #1 and TP #2. CSI-RS resource #1 is a resource where TP #1 allocates a non-zero power CSI-RS and TP #2 allocates a zero-power CSI-RS. CSI-RS resource #2 is a resource where TP #1 and TP #2 allocate non-zero power CSI-RSs. CSI-IM resource #1 is a resource where TP #1 allocates a zero-power CSI-RS and TP #2 allocates a PDSCH signal. CSI-IM resource #2 is a resource where TP #1 and TP #2 allocate zero-power CSI-RSs.

The user terminal can estimate the signal power from TP #1 by using CSI-RS resource #1, and estimate the signal power combining the signals from TP #1 and TP #2 by using CSI-RS resource #2. Also, the user terminal estimates the interference signal power from cells apart from TP #1 by using CSI-IM resource #1, and estimate the interference signal power from cells apart from TP #1 and TP #2 by using CSI-IM resource #2.

Next, the user terminal sends feedback regarding the channel states measured in the CSI-RS resources and the CSI-IM resources (for example, information about signal power) to the radio base stations. At this point, the user terminal feeds back CSI processes, which combine the channel states estimated by using the CSI-RS resources and the CSI-IM resources as appropriate.

For example, as shown in FIG. 5B, the combination of information about the signal power of CSI-RS #1 and information about the signal power of CSI-IM #1 is defined as a CSI process #1. Also, the combination of information about the signal power of CSI-RS #1 and information about the signal power of CSI-IM #2 is defined as a CSI process #2. Also, the combination of information about the signal power of CSI-RS #2 and information about the signal power of CSI-IM #2 is defined as a CSI process #3. Note that the combinations of CSI-RSs and CSI-IMs are by no means limited to these.

The radio base stations can adequately learn channel state information (CSI) that takes into account interference components from other cells based on CSI processes that are fed back from the user terminal. As a result of this, the radio base stations can employ CoMP, in an effective manner, by taking into account the user terminal's channel state with respect to each cell.

In the case illustrated in FIGs. 5, CSI processes to take into account two transmission points may be configured. However, if CoMP is employed between a user terminal and a plurality of small cells in an area where small cells are placed in a high density, it is preferable to increase the number of CSI processes per user terminal in order to increase the gain by CoMP.

In this case, if the user terminal feeds back all the CSI processes, the overhead of CSI feedback increases. On the other hand, when the overhead of CSI feedback is simply made small, there is a threat that desired CSI cannot be fed back from the user terminal, and CoMP cannot be employed in an effective manner. In this way, when CoMP is employed in areas where small cells are placed in a high density, how a user terminal should feed back CSI processes is the problem.

So, the present inventors have come up with the idea of preparing a plurality of tables, in which information about CSI processes that combine channel estimation results determined by using CSI-RS resources and channel estimation results determined by using CSI-IM resources are defined, and switching between and using these multiple tables. Now, the present embodiment will be described below in detail with reference to the accompanying drawings.

### (First Example)

A case will be described with a first example where a user terminal feeds back CSI (CSI processes) in response to CSI requests (triggers) from radio base stations (aperiodic CSI feedback).

In response to a CSI request (trigger) from a radio base station, aperiodic channel state information (aperiodic CSI) is transmitted from a user terminal to the radio base station. The trigger (aperiodic CSI triggering) that is reported from the radio base station is included in a UL grant (DCI format 0/4) transmitted in a downlink control channel (PDCCH). The user terminal reports CSI (hereinafter also referred to as "A-CSI"), aperiodically, by using an uplink data channel (PUSCH) that is specified in the UL grant, in accordance with the trigger included in the UL grant. Such reporting of A-CSI is also referred to as "aperiodic CSI report."

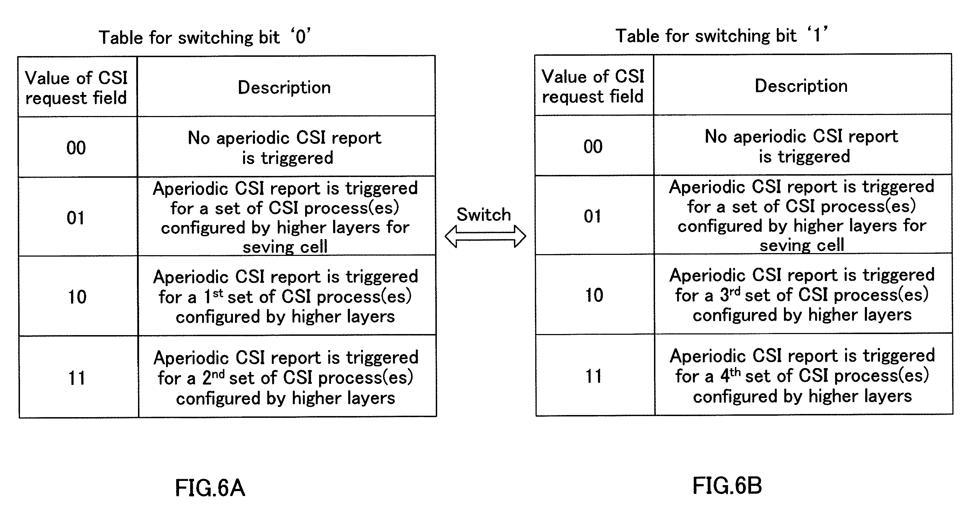

FIG. 6 shows a plurality of tables (here, two types of tables), in which whether or not aperiodic CSI is triggered and the contents of CSI processes (CSI process sets) to be reported from the user terminal when aperiodic CSI triggered are defined. In each table, four operation patterns (two bits) for aperiodic CSI feedback are defined. Different aperiodic CSI feedback operations are defined for every CSI request field bit.

n FIG. 6, cases where aperiodic CSI is not triggered ("00") and cases where aperiodic CSI is triggered ("01," "10" and "11") are defined. The user terminal does not report CSI when the bit value of the CSI request field in downlink control information (DCI) is "00." On the other hand, the user terminal feeds back predetermined CSI (CSI processes) when the bit value of the CSI request field in downlink control information (DCI) is "01," "10" and "11."

In the table of FIG. 6A, "01" represents the case where the user terminal reports a CSI process set that is configured in advance for the serving cell by higher layer signaling (for example, RRC signaling and so on). Also, "10" and "11" represent the cases where the user terminal reports the first CSI process set and the second CSI process set configured by higher layer signaling, respectively. Note that a CSI process set corresponds to the combination of at least one type of CSI processes, and a different CSI process is defined for every bit value.

In this way, the user terminal controls whether or not to feed back CSI and the CSI processes to use when feeding back CSI depending on the bit value of the CSI request field contained in downlink control information that is transmitted in a downlink control channel (PDCCH). Note that the configurations (locations, transmission cycles, and so on) of CSI-RS resources and CSI-IM resources, CSI processes (information about the combinations of CSI-RSs and CSI-IMs), and information about CSI process sets can be reported from radio base stations (for example, a macro base station) to user terminals by using higher layer signaling (broadcast signals, RRC signaling and so on).

In this way, information about CoMP between small cells may be reported from a macro base station to a user terminal. Also, the user terminal may be configured to report CSI processes to the macro base station as well (in particular, in the event of intra-base-station CA (intra-eNB CA)). Obviously, the user terminal may report CSI processes to small base stations (in particular, in the event of inter-base-station CA (inter-eNB CA)). Note that intra-eNB CA refers to the mode of providing schedulers in macro base stations and controlling the scheduling of small base stations in the macro base stations. Also, inter-eNB CA refers to the mode in which both macro base stations and small base stations are provided with schedulers, and the macro base stations and the small base stations control scheduling independently.

Similarly, in the table of FIG. 6B, "01" represents the case where a user terminal reports a CSI process set that is configured for the serving cell by higher layer signaling. Also, "10" and "11" represent the cases where the user terminal reports the third CSI process set and the fourth CSI process set, which are configured by higher layer signaling, respectively. A CSI process set corresponds to the combination of at least one type of CSI processes, and a different CSI process is defined for every bit value. The contents of the third CSI process set and the fourth CSI process set are configured to be different from the contents of the first CSI process set and the second CSI process set in FIG. 6A.

Also, the user terminal switches between and uses the table of FIG. 6A and the table of FIG. 6B based on information that is contained in downlink signals. For example, the radio base stations include a table-switching signal (table-switching request signal) in downlink control information (DCI) and report this to the user terminal. To be more specific, a structure may be employed here in which a bit field of one bit for switching the table is provided in downlink control information, and the user terminal switches the table in accordance with the bit value of this bit field.

For example, the user terminal uses the table of FIG. 6A when the table-switching bit value is "0," and uses the table of FIG. 6B when this bit value is "1." The table-switching bit field can be provided in, for example, user-specific search spaces in downlink control signals (PDCCH signal and/or EPDCCH signal). The radio base stations can adequately judge the contents of CSI (CSI processes) fed back from user terminal based on the bit values configured in downlink signals.

Note that the radio base stations by no means have to transmit the table-switching signal (table-switching request signal) in downlink control information, and may as well transmit the table-switching signal by means of a MAC (Medium Access Control) layer signal (MAC signal). Also, although a case is shown with FIGs. 6 where a user terminal switches between two types of tables, it is equally possible to switch between three or more types of tables.

In this way, a user terminal switches between and uses a plurality of tables based on downlink signals (for example, downlink control information, MAC signals and so on), so that it becomes possible to feed back a plurality of types of CSI processes. By this means, the user terminal can feed back adequate CSI to radio base stations even in an environment in which cells are arranged in a high density, and therefore can execute CoMP with multiple cells adequately.

### (Second Example)

A case will be described with a second example in which CSI is fed back from a user terminal periodically (periodic CSI feedback).

With periodic channel state information (periodic CSI), CSI is transmitted from a user terminal to radio base stations periodically. With periodic CSI feedback, when no uplink data signal (PUSCH signal) is transmitted in a timing (subframe) a user terminal transmits CSI, the user terminal transmits the CSI by using an uplink control channel (PUCCH). On the other hand, when an uplink data signal is also transmitted in a timing to feed back CSI, the user terminal transmits the CSI by using an uplink shared data channel (PUSCH).

With the present embodiment, a user terminal feeds back predetermined CSI (CSI processes) not only in periodic CSI feedback, but also in aperiodic CSI feedback as well, by using a plurality of tables. For example, when a table-switching request signal is included in a downlink signal (downlink control signal, MAC signal and so on), the table to correspond to this table-switching request signal is selected and the contents of the CSI to feed back periodically are determined.

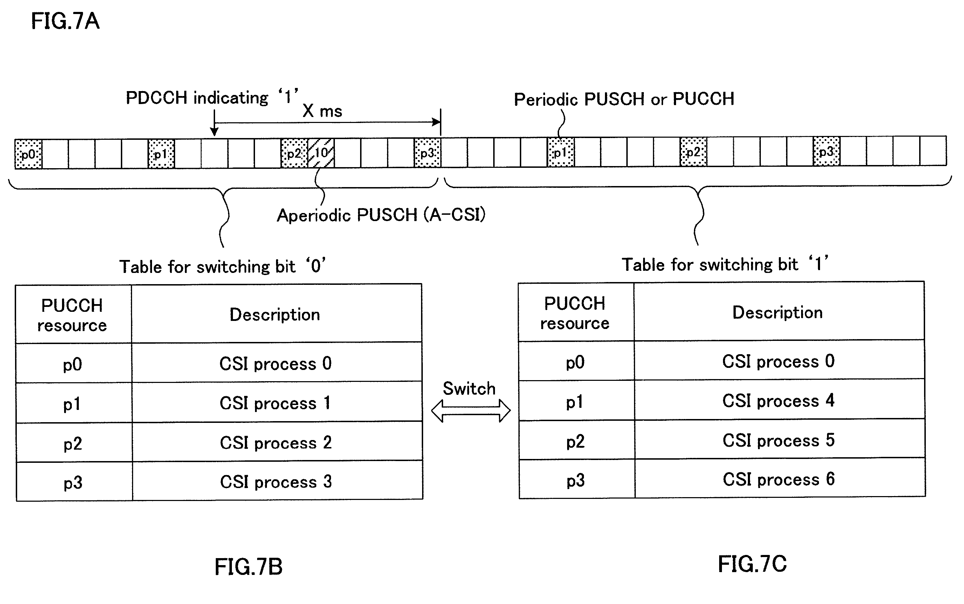

FIG. 7A shows timings (subframes) in which a user terminal feed back CSI (CSI processes). Also, FIGs. 7B and 7C show tables in which information about the PUCCH resources (p0, p1, p2 and p3) where periodic CSI is allocated, and the contents of CSI processes are associated with each other. Information about the PUCCH resources (p0 to p3) is associated with PRB indices, cyclic shift information and so on.

As shown in FIG. 7A, the user terminal feeds back different CSI processes in order by using PUCCH resources (here, p0, p1, p2 and p3) of a predetermined subframe. In this way, by periodically feeding back four types of CSI processes that are periodically configured in the user terminal in order, the radio base stations can learn channel states based on each CSI process that is fed back. Note that the CSI processes corresponding to p0 to p3 can be reported to the user terminal in advance by higher layer signaling (for example, RRC signaling, broadcast signals and so on).

Furthermore, with the present embodiment, multiple types (here, two types) of tables to use in periodic CSI feedback are defined (FIGs. 7B and 7C), and a user terminal switches between and uses these tables. In FIG. 7B, CSI processes 0 to 3 correspond to p0 to p3, respectively, and, in FIG. 7C, CSI processes 0 and 4 to 6 correspond to p0 to p3, respectively.

The user terminal switches between and controls the table of FIG. 7B and the table of FIG. 7C based on signals (table-switching request signals) included in downlink signals. For example, the user terminal uses the table of FIG. 7B when the bit value of the table-switching request signal is "0." In this case, the user terminal feeds back CSI process 0 to CSI process 3 in order, in a predetermined cycle. Also, the user terminal uses the table of FIG. 7C when the bit value of the table-switching request signal is "1." In this case, the user terminal feeds back CSI process 0 and CSI process 4 to CSI process 6 in order, in a predetermined cycle.

The radio base stations determine the channel state information that is required to control CoMP, based on the conditions of communication with the user terminal (the user terminal's location and so on), and selects the table in which this channel state information is defined. Then, the radio base stations include a table-switching request signal in a downlink signal and transmit this signal to the user terminal, and thereupon can acquire the required CSI (CSI processes) from the user terminal.

Also, the tables can be switched in association with the aperiodic CSI feedback shown with the above first example. That is, the user terminal, upon detecting a table-switching request signal in a downlink signal, switches the tables to use in both aperiodic CSI feedback and periodic CSI feedback.

In this case, it is preferable to associate and define the CSI processes contained in the table for aperiodic CSI feedback and the table for periodic CSI feedback. For example, at least one of CSI process 0 to CSI process 3 defined in the table of FIG. 7B is included in the first CSI process set and/or the second CSI process set defined in the above table of FIG. 6A. Also, at least one of CSI process 0 and CSI process 4 to CSI process 6 defined in the table of FIG. 7C is included in the third CSI process set and/or the fourth CSI process set defined in the table of above FIG. 6B.

By this means, the radio base stations can acquire information about desired channel states based on periodic CSI and aperiodic CSI that are fed back from the user terminal.

On the other hand, different CSI processes may be configured between the table for aperiodic CSI feedback and the table for periodic CSI feedback. By configuring varying CSI processes between the table for aperiodic CSI feedback and the table for periodic CSI feedback, it becomes possible to feed back a larger number of CSI processes in both periodic CSI feedback and aperiodic CSI feedback.

Note that the user terminal, upon detecting a table-switching request signal, can control the timing to switch the table to use in aperiodic CSI feedback and in periodic CSI feedback. For example, upon detecting a table-switching request signal, the user terminal switches to a new table at the timing to feed back the next aperiodic CSI (CSI processes) in aperiodic CSI feedback. In FIG. 7A, the user terminal feeds back A-CSI, by using the table after the switch, in a subframe that comes a predetermined number of subframes (for example, four subframes) after the subframe in which the table-switching request signal is transmitted.

On the other hand, periodic CSI feedback may be controlled so that the user terminal makes switch to a new table a predetermined period (for example, X ms) after a table-switching request signal is detected. For example, the user terminal may be configured to switch the table after a table-switching request signal is detected and all the CSI processes defined in the table (in FIG. 7, up to the CSI process corresponding to p3) are fed back.

In this way, a user terminal switches between and uses a plurality of tables based on downlink signals (for example, downlink control information, MAC signals and so on), so that it becomes possible to feed back a plurality of types of CSI processes. By this means, the user terminal can feed back adequate CSI to radio base stations even in an environment in which cells are arranged in a high density, and therefore can execute CoMP with multiple cells adequately.

### (Structure of Radio Communication System)

Now, a structure of a radio communication system according to the present embodiment will be described below. In this radio communication system, the above-described radio communication methods according to the first and second examples are employed. Note that the above-described radio communication methods according to the first and second examples may be applied individually or may be applied in combination.

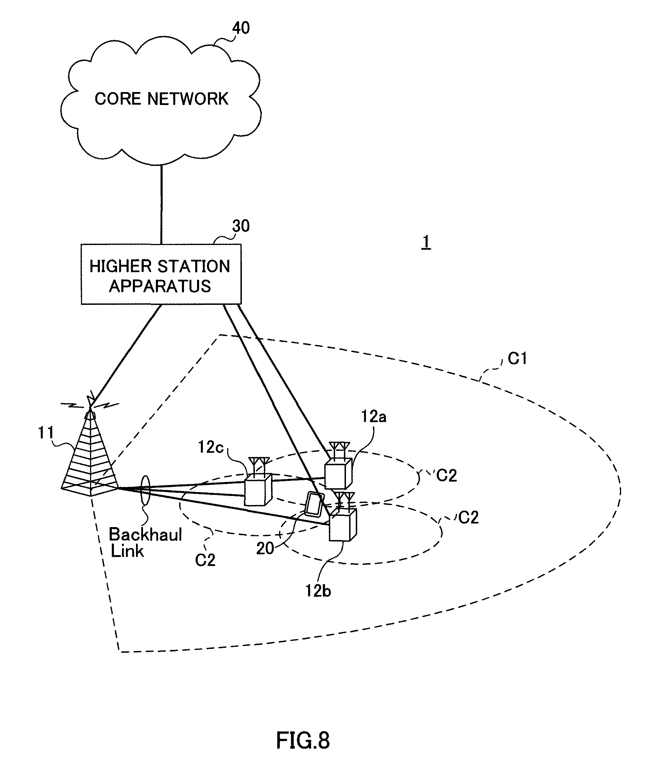

FIG. 8 is a schematic structure diagram of the radio communication system according to the present embodiment. Note that the radio communication system shown in FIG. 13 is a system to incorporate, for example, the LTE system or SUPER 3G. This radio communication system can adopt carrier aggregation (CA) to group a plurality of fundamental frequency blocks (component carriers) into one, where the system bandwidth of the LTE system constitutes one unit. Also, this radio communication system may be referred to as "IMT-advanced," or may be referred to as "4G," "FRA (Future Radio Access)," etc.

The radio communication system 1 shown in FIG. 8 includes a radio base station 11 that forms a macro cell C1, and radio base stations 12a to 12c that are placed inside the macro cell C1 and form small cells C2, which are narrower than the macro cell C1. Also, user terminals 20 are placed in the macro cell C1 and in each small cell C2. The user terminals 20 can connect with both the radio base station 11 and the radio base stations 12 (dual connectivity). In this case, the user terminals 20 may use the macro cell C1 and the small cells C2, which use different frequencies, at the same time, by means of CA (carrier aggregation). Also, information (macro assist information) about the radio base stations 12 can be transmitted from the radio base station 11 to the user terminals 20.

Between the user terminals 20 and the radio base station 11, communication is carried out using a carrier of a relatively low frequency band (for example, 2 GHz) and a narrow bandwidth (referred to as, for example, "existing carrier," "legacy carrier" and so on). Meanwhile, between the user terminals 20 and the radio base stations 12, a carrier of a relatively high frequency band (for example, 3. 5 GHz and so on) and a wide bandwidth may be used, or the same carrier as that used in the radio base station 11 may be used. A new carrier type (NCT) may be used as the carrier type between the user terminals 20 and the radio base stations 12. Between the radio base station 11 and the radio base stations 12 (or between the radio base stations 12), wire connection (optical fiber, X2 interface and so on) or wireless connection is established.

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with the higher station apparatus via the radio base station 11.

Note that the radio base station 11 is a radio base station having relatively wide coverage, and may be referred to as an "eNodeB," a "macro base station," a "transmitting/receiving point" and so on. Also, the radio base stations 12 are radio base stations having local coverage, and may be referred to as "small base stations," "pico base stations," "femto base stations," "home eNodeBs," "RRHs (Remote Radio Heads)," "micro base stations," "transmitting/receiving points" and so on. The radio base stations 11 and 12 will be collectively referred to as "radio base station 10," unless specified otherwise. Each user terminal 20 is a terminal to support various communication schemes such as LTE, LTE-A and so on, and may be both a mobile communication terminal and a stationary communication terminal.

In the radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency band into a plurality of narrow frequency bands (subcarriers) and mapping data to each subcarrier. SC-FDMA is a single-carrier communication scheme to mitigate interference between terminals by dividing the system band into bands formed with one or continuous resource blocks, per terminal, and allowing a plurality of terminals to use mutually different bands.

Now, the communication channels used in the radio communication system shown in FIG. 8 will be described. Downlink communication channels include a PDSCH (Physical Downlink Shared CHannel), which is used by each user terminal 20 on a shared basis, and downlink L1/L2 control channels (PDCCH, PCFICH, PHICH and enhanced PDCCH). User data and higher control information are communicated by the PDSCH. Scheduling information for the PDSCH and the PUSCH and so on are communicated by the PDCCH (Physical Downlink Control Channel). The number of OFDM symbols to use for the PDCCH is communicated by the PCFICH (Physical Control Format Indicator CHannel). HARQ ACKs/NACKs in response to the PUSCH are communicated by the PHICH (Physical Hybrid-ARQ Indicator Channel). Also, the scheduling information for the PDSCH and the PUSCH and so on may be communicated by the enhanced PDCCH (EPDCCH) as well. This EPDCCH is frequency-division-multiplexed with the PDSCH (downlink shared data channel).

Uplink communication channels include a PUSCH (Physical Uplink Shared CHannel), which is used by each user terminal 20 on a shared basis as an uplink data channel, and a PUCCH (Physical Uplink Control CHannel), which is an uplink control channel. User data and higher control information are communicated by this PUSCH. Also, downlink radio quality information (CQI), delivery acknowledgement signals (ACKs/NACKs) and so on are communicated by the PUCCH.

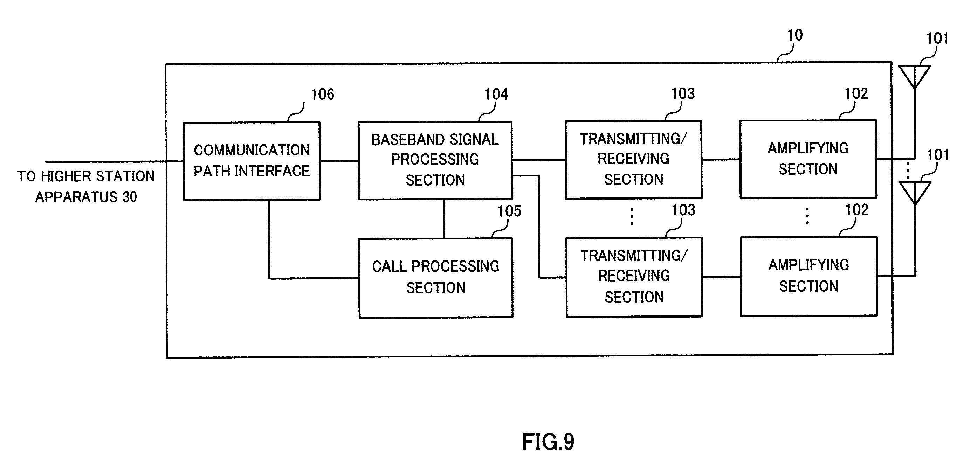

FIG. 9 is a diagram to show an overall structure of a radio base station 10 (which may be either a radio base station 11 or 12) according to the present embodiment. The radio base station 10 has a plurality of transmitting/receiving antennas 101 for MIMO communication, amplifying sections 102,transmitting/receiving section 103, a baseband signal processing section 104, a call processing section 105 and a communication path interface 106.

User data to be transmitted from the radio base station 10 to a user terminal 20 on the downlink is input from the higher station apparatus 30, into the baseband signal processing section 104, via a communication path interface 106.

In the baseband signal processing section 104, the input user data is subjected to a PDCP (Packet Data Convergence Protocol) layer process, division and coupling of user data, RLC (Radio Link Control) layer transmission processes such as an RLC retransmission control transmission process, MAC (Medium Access Control) retransmission control (for example, an HARQ transmission process), scheduling, transport format selection, channel coding, an inverse fast Fourier transform (IFFT) process and a pre-coding process, and the result is forwarded to each transmitting/receiving section 103. Furthermore, downlink control channel signals are also subjected to transmission processes such as channel coding and an inverse fast Fourier transform, and are forwarded to each transmitting/receiving section 103.

Also, the baseband signal processing section 104 reports, to the user terminals 20, control information for allowing communication in the cell, through higher layer signaling (RRC signaling, broadcast information and so on). The information for allowing communication in the cell includes, for example, the uplink or the downlink system bandwidth and so on. Also, it is possible to include and report information about CSI-RS resources, CSI-IM resources, CSI processes and the CSI process sets to be configured in the CSI request field, in higher layer signaling.

Each transmitting/receiving section 103 converts the baseband signals, which are pre-coded and output from the baseband signal processing section 104 on a per antenna basis, into a radio frequency band. The amplifying sections 102 amplify the radio frequency signals having been subjected to frequency conversion, and transmit the signals through the transmitting/receiving antennas 101. Also, the transmitting/receiving sections 103 function as transmission sections to transmit information about CSI-RS resources and CSI-IM resources, and information about the table which the user terminal uses in CSI feedback (CSI process set contents and so on).

On the other hand, as for data to be transmitted from the user terminal 20 to the radio base station 10 on the uplink, radio frequency signals that are received in the transmitting/receiving antennas 101 are each amplified in the amplifying sections 102, converted into baseband signals through frequency conversion in each transmitting/receiving section 103, and input in the baseband signal processing section 104.

In the baseband signal processing section 104, the user data that is included in the input baseband signals is subjected to an FFT process, an IDFT process, error correction decoding, a MAC retransmission control receiving process, and RLC layer and PDCP layer receiving processes, and the result is forwarded to the higher station apparatus 30 via the communication path interface 106. The call processing section 105 performs call processing such as setting up and releasing communication channels, manages the state of the radio base stations 10 and manages the radio resources.

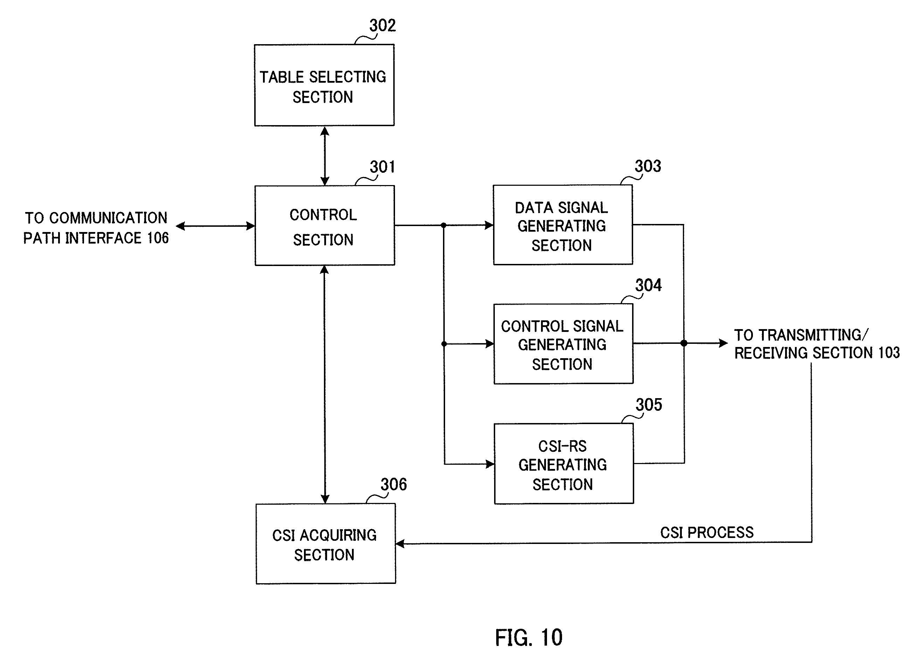

FIG. 10 is a diagram to show a principle functional structure of the baseband signal processing section 104 provided in a radio base station 10 (which may be, for example, a radio base station 12 that serves as a small base station) according to the present embodiment. Note that, although FIG. 10 shows the function blocks of parts that are characteristic of the present embodiment, the radio base station 10 has other function blocks that are required in radio communication.

As shown in FIG. 10, the baseband signal processing section 104 provided in the radio base station 10 is comprised of a control section (scheduler) 301, a table selecting section 302, a data signal generating section 303, a control signal generating section 304, a CSI-RS generating section 305 and a CSI acquiring section (identifying section) 306.

The control section (scheduler) 301 controls the scheduling of downlink data signals that are transmitted in the PDSCH, downlink control signals that are communicated in the PDCCH and/or the enhanced PDCCH (EPDCCH), downlink reference signals such as CSI-RSs, and so on. Also, the control section 301 controls the scheduling of uplink data that is communicated in the PUSCH, uplink control information that is communicated in the PUCCH or the PUSCH, and uplink reference signals (allocation control). Information about the allocation control of uplink signals (uplink control signals and uplink user data) is reported to the user terminals by using a downlink control signal (DCI).

Also, the control section 301 allocates radio resources based on command information from the higher station apparatus 30 and/or feedback information from each user terminal 20 (which is, for example, CSI including CQIs, RIs and so on).

The table selecting section 302 determines the tables which the user terminal uses to feed back channel state information. For example, the table selecting section 302 selects the table in which the CSI (CSI processes) to be required to execute CoMP with other radio base stations is defined, and outputs this to the control section 301.

The downlink data signal generating section 303 generates downlink data signals (PDSCH signals) that are determined to be allocated to resources by the control section 301. The data signals that are generated in the data signal generating section 303 are subjected to a coding process and a modulation process, based on the coding rates and modulation schemes that are determined based on the CSI from each user terminal 20 and so on.

The control signal generating section 304 generates the downlink control signals (PDCCH signals and/or EPDCCH signals) determined to be allocated by the control section 301. To be more specific, based on commands from the control section 301, the control signal generating section 304 generates a DL assignment to report downlink signal allocation information, and a UL grant to report uplink signal allocation information. Also, the control signal generating section 304 configures predetermined bits in the CSI request field when requesting aperiodic CSI feedback to the user terminal.

Also, when the user terminal switches the table to use for CSI feedback, the control signal generating section 304 generates a table-switching request signal. The table-switching request signal that is generated in the control signal generating section 304 may be provided in user-specific search spaces in downlink control signals (PDCCH signal and/or EPDCCH signal). Also, the transmitting/receiving section 103 may transmit the table-switching request signal generated in the control signal generating section 304 by using a MAC layer signal (MAC signal).

Also, the control signal generating section 304 may generate information about CSI-RS resources and CSI-IM resources and information about the tables which the user terminal uses in CSI feedback.

The CSI-RS generating section 305 generates CSI-RSs based on commands from the control section 301. For example, the CSI-RS generating section 305 generates non-zero power CSI-RSs to allocate to CSI-RS resources and zero-power CSI-RSs to allocate to CSI-IM resources.

The CSI acquiring section (identifying section) 306 acquires the CSI (CSI processes) that is fed back from the user terminal 20, and, furthermore, identifies the content of the CSI processes received. For example, regarding aperiodic CSI, the CSI acquiring section 306 can identify the content of the CSI that is received, based on the tables selected in the table selecting section 302 and the bit value of the CSI request field.

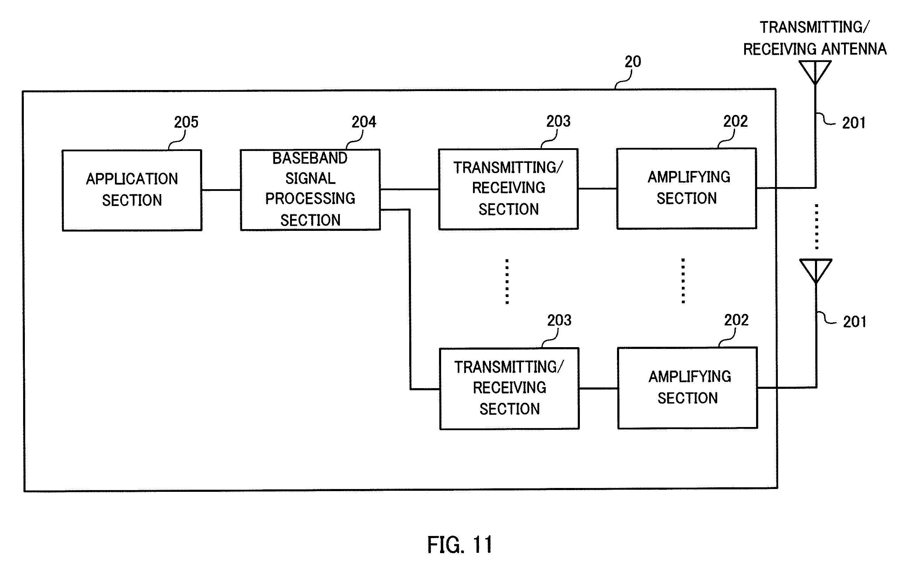

FIG. 11 is a diagram to show an overall structure of a user terminal 20 according to the present embodiment. The user terminal 20 has a plurality of transmitting/receiving antennas 201 for MIMO communication, amplifying sections 202, transmitting/receiving sections (receiving sections) 203, a baseband signal processing section 204 and an application section 205.

As for downlink data, radio frequency signals that are received in the plurality of transmitting/receiving antennas 201 are each amplified in the amplifying sections 202, and subjected to frequency conversion and converted into the baseband signal in the transmitting/receiving section 203. This baseband signal is subjected to receiving processes in the baseband signal processing section 204, including an FFT process, error correction decoding, retransmission control (HARQ-ACK) and so on. In this downlink data, downlink user data is forwarded to the application section 205. The application section 205 performs processes related to higher layers above the physical layer and the MAC layer. Furthermore, in the downlink data, broadcast information is also forwarded to the application section 205. The transmitting/receiving antennas 201 function as receiving sections to receive information about CSI-RS resources and CSI-IM resources and information about the tables which the user terminal uses in CSI feedback (the contents of CSI process sets and so on).

Meanwhile, uplink user data is input from the application section 205 to the baseband signal processing section 204. In the baseband signal processing section 204, a retransmission control (H-ARQ (Hybrid ARQ)) transmission process, channel coding, precoding, a DFT process, an IFFT process and so on are performed, and the result is forwarded to each transmitting/receiving section 203. The baseband signal that is output from the baseband signal processing section 204 is converted into a radio frequency band in the transmitting/receiving section 203. After that, the amplifying sections 202 amplify the radio frequency signals having been subjected to frequency conversion, and transmit the resulting signals from the transmitting/receiving antennas 201.

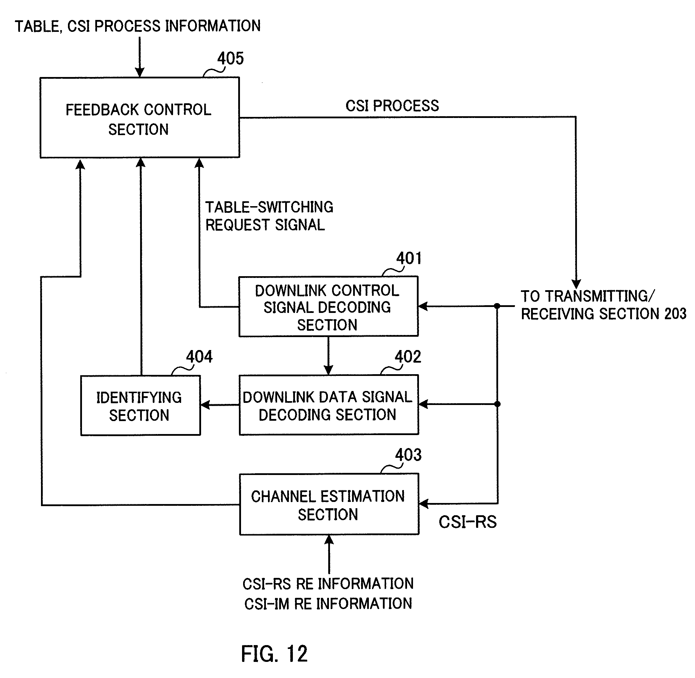

FIG. 12 is a diagram to show a principle functional structure of the baseband signal processing section 204 provided in the user terminal 20. Note that, although FIG. 12 shows the function blocks of parts that are characteristic of the present embodiment, the user terminal 20 has other function blocks that are required in radio communication.

As shown in FIG. 12, the baseband signal processing section 204 provided in the user terminal 20 has a downlink control signal decoding section 401, a downlink data signal decoding section 402, a channel estimation section 403, an identifying section 404 and a feedback control section (control section) 405.

The downlink control signal decoding section 401 decodes the downlink control signals (UL grants, DL assignments, etc.) transmitted in the downlink control channel (PDCCH), and outputs scheduling information and so on to the feedback control section 405. When the downlink control signal decoding section 401 detects an aperiodic CSI request signal (trigger), a table-switching request signal and so on that are included in the downlink control signals, these are output to the feedback control section 405.

The downlink data signal decoding section 402 decodes the downlink data signals transmitted in the downlink shared channel (PDSCH), and outputs the results to the identifying section 404. The identifying section 404 makes a retransmission control decision (delivery acknowledgement (ACK/NACK)) in response to every DL subframe based on the decoding results in the downlink data signal decoding section 402. The delivery acknowledgement decisions in the identifying section 404 are output to the feedback control section 405.

The channel estimation section 403 performs channel estimation based on CSI-RSs transmitted from the radio base stations, and also generates channel state information. That is, the channel estimation section 403 functions as a channel state information generating section. Also, a structure may also be employed in which the channel estimation section 403 only performs channel estimation, and CSI (CSI processes) is generated in the feedback control section 405.

To be more specific, the channel estimation section 403 performs channel estimation based on CSI-RS resources and CSI-IM resources and generates each CSI (CSI processes). For example, the channel estimation section 403 measures the signal power in CSI-RS resources and the signal power in CSI-IM resources. Also, the channel estimation section 403 can also estimate the RSRQ (Reference Signal Received Quality) and the SINR based on the measured signal powers.

Also, the channel estimation section 403 may generate all the CSI (CSI processes) defined in each table regardless of the contents of CSI (CSI processes) fed back from the feedback control section 405. By this means, the feedback control section 405 becomes capable of feeding back CSI quickly.

The feedback control section 405 controls uplink signal feedback based on the scheduling information that is output from the downlink control signal decoding section 401, the retransmission control decisions that are output from the identifying section 404, and the CSI (CSI processes) that is output from the channel estimation section 403.

To be more specific, the feedback control section 405 controls the feedback of CSI (CSI processes) by using information that is output from the channel estimation section 403 and a plurality of tables in which CSI processes are defined. For example, the feedback control section 405 switches between and use a plurality of tables as shown in above FIGs. 6 when executing aperiodic CSI feedback, and switches between and uses a plurality of tables as shown in above FIGs. 7 when executing periodic CSI feedback. The feedback control section 405 switches between and uses the tables when a table-switching request signal is included in a downlink control signal.

As described above, with the present embodiment, when a user terminal switches between and uses a plurality of tables based on downlink signals (for example, downlink control information, MAC signals and so on), it becomes possible to feed back plurality of types of CSI processes. By this means, a user terminal can feed back adequate CSI to radio base stations even in an environment in which cells are arranged in a high density, and therefore can adequately execute CoMP with multiple cells.

Now, although the present invention has been described in detail with reference to the above embodiment, it should be obvious to a person skilled in the art that the present invention is by no means limited to the embodiment described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2013-270120, filed on December 26, 2013, including the specification, drawings and abstract, is incorporated herein by reference in its entirety.

## Claims

1. A user terminal that executes coordinated transmission with a plurality of cells, the user terminal comprising:
an estimation section that performs channel estimation by using a plurality of desired signal power measurement resources and interference signal power measurement resources; and
a control section that controls feedback of CSI processes by using a table, in which at least information about the CSI processes is defined, the CSI processes being combinations of estimation results of predetermined desired signal power measurement resources and estimation results of interference signal power measurement resources,
wherein the control section switches between and uses a plurality of tables, in each of which information about different CSI processes is defined.

2. The user terminal according to claim 1, wherein the estimation section measures received power in desired signal power measurement resources configured in the user terminal and received power in interference signal power measurement resources.

3. The user terminal according to claim 1, wherein, when the CSI processes are fed back aperiodically based on channel state information report requests included in downlink control signals, the control section uses a table in which information about a different CSI process is defined for each of a plurality of bit values.

4. The user terminal according to claim 1, wherein, when the CSI processes are fed back periodically, the control section uses a table in which information about a different CSI process is defined for each uplink control channel resource for feeding back the CSI processes.

5. The user terminal according to claim 1, wherein the control section uses tables between which different CSI processes are configured when the CSI processes are fed back periodically and when the CSI processes are fed back aperiodically.

6. The user terminal according to claim 3 or claim 4, wherein, regardless of contents of the CSI processes to feed back, the estimation section generates the CSI processes defined in each table.

7. The user terminal according to one of claim 1 to claim 5, wherein the control section controls switching of the tables based on a table-switching request signal included in a downlink signal.

8. The user terminal according to claim 4, wherein the control section switches the table to employ when the CSI processes are fed back periodically a predetermined period after a table-switching request signal included in a downlink signal is received.

9. A radio base station that coordinates with other radio base stations and communicates with a user terminal, the radio base station comprising:
a transmission section that transmits, to the user terminal, information about desired signal power measurement resources and interference signal power measurement resources, and information about a table which the user terminal uses to feed back CSI processes;
a receiving section that receive the CSI processes transmitted from the user terminal; and
an identifying section that identifies the received CSI processes based on the information about the table reported to the user terminal.

10. A radio communication method for a user terminal that executes coordinated transmission with a plurality of cells, the radio communication method comprising the steps of:
performing channel estimation by using a plurality of desired signal power measurement resources and interference signal power measurement resources; and
controlling feedback of CSI processes by using a table, in which at least information about the CSI processes is defined, the CSI processes being combinations of estimation results of predetermined desired signal power measurement resources and estimation results of interference signal power measurement resources,
wherein the user terminal switches between and uses a plurality of tables, in each of which information about different CSI processes is defined, based on table-switching information included in downlink signals.
